# EUROPÄISCHE PATENTSCHRIFT

(11) **EP 2 304 250 B1**
(45) Veröffentlichungstag und Bekanntmachung des Hinweises auf die Patenterteilung: **09.10.2013**
(21) Anmeldenummer: 09757161.6
(22) Anmeldetag: 12.05.2009
(51) Int. Cl.: F16B 5/02, F16B 13/12, F16B 37/00

(54) **SCHRAUBCLIP**
SCREW CLIP
CLIP À VIS

(30) Priorität: 02.06.2008 DE 202008007378 U
(43) Veröffentlichungstag der Anmeldung: 06.04.2011
(73) Patentinhaber: Böllhoff Verbindungstechnik GmbH, 33649 Bielefeld (DE)
(72) Erfinder: DEMBOWSKY, Hans-Joachim, 21035 Hamburg (DE); VORDERWISCH, Alexander, 33613 Bielefeld (DE); JODELEIT, Martin, 33617 Bielefeld (DE)
(74) Vertreter: Heyer, Volker
(86) Internationale Anmeldenummer: PCT/EP2009/003375
(87) Internationale Veröffentlichungsnummer: WO 2009/146777

(56) Entgegenhaltungen:
- DE-A1- 1 575 071
- US-A- 2 836 214
- US-A- 3 756 116

## Beschreibung

### 1. Gebiet der Erfindung

Die vorliegende Erfindung betrifft einen Schraubclip, um ein Anbauteil mit Hilfe einer Schraube beispielsweise im Kraftfahrzeug zu befestigen.

### 2. Hintergrund der Erfindung

Bekannte Schraubclips werden beispielsweise im Kraftfahrzeug oder in anderen Fahrzeugen zur Befestigung von Anbauteilen eingesetzt. Hierbei variieren sowohl die Wandstärken des zu befestigenden Anbauteils wie auch die Wandstärken des Bauteils, an dem befestigt wird.

Bekannte Schraubclips weisen eine dübelartige Schraubenaufnahme auf. Die Schraubenaufnahme hat die Form eines regelmäßigen, vierseitigen Pyramidenstumpfs. Zwei sich gegenüberliegende Seitenflächen des Pyramidenstumpfs sind mittig durchbrochen. Sie bilden dadurch zwei aufeinanderzu federnde Schenkel innerhalb der dübelartigen Schraubenaufnahme. Während ein Ende der dübelartigen Aufnahme geschlossen ist, befindet sich am anderen Ende eine tellerförmige Anordnung. Diese tellerförmige Anordnung ist in gleicher Weise durchbrochen wie die dübelartige Schraubenaufnahme.

Die bekannten Schraubclips werden in ein viereckiges Loch eingesetzt, wobei die tellerförmige Anordnung ein Durchrutschen des Schraubclips durch dieses Loch verhindert. Es ist jedoch von Nachteil, dass sich die bekannten Schraubclips nach dem Einsetzen nicht verlässlich befestigen lassen. Teilweise werden die Schraubclips nach Befestigung eines Anbauteils aus dem viereckigen Loch gerissen. Zudem sind die bekannten Schraubclips nicht universell einsetzbar bei der Befestigung von Anbauteilen unterschiedlicher Wandstärke. Auch hier variiert die Befestigungsstärke, so dass zur Sicherheit eine größere Zahl von Befestigungspunkten für das Anbauteil vorgesehen werden muss.

DE 1 575 071 A1 beschreibt eine Haltefassung zur Aufnahme eines Zapfens und zur Anbringung an einer Ausnehmung einer Platte durch Biegen eines Blechzuschnitts. Die Fassung besitzt einen kurzen, im Querschnitt rechteckigen Eintrittsteil, der im Bereich einer Ecke des rechteckigen Querschnitts eine offene Längsnaht hat, wobei die vier Seiten des Querschnitts am einen Ende des Eintrittsteils mit je einem langgestreckten Fortsatz versehen sind, die Fortsätze an dem Eingangsteil einseitige abgestützte Federn bilden und freie Endteile der Fortsätze einwärts gebogen sind, sodass sie einen Halteteil bilden, der einen kleineren Querschnitt hat als der Eintrittsteil.

US 3,756,116 A beschreibt einen Schraubclip aus Kunststoff. Dieser weist eine viereckige Querschnittsstruktur auf und ist in eine Öffnung einsetzbar um dort durch Verschrauben eines weiteren Teils selbstbefestigt zu werden. Der Schraubclip hat an gegenüberliegenden Seitenflächen verriegelnde Rastnasen, die Entfernen des Schraubclips aus der Öffnung verhindern.

US 2,836,214 A beschreibt ebenfalls einen Schraubclip aus Kunststoff, der in einer Öffnung eines Bauteils verankert werden kann. Dieser Schraubclip weist gegenüberliegend angeordnete federnde Schenkel auf, die ein Halten des Schraubclips in der Öffnung unterstützen. Federnde Flächen dieses Schraubclips greifen an den Seitenkanten der Öffnung an um den Schraubclip dort zu halten.

Es ist daher die Aufgabe vorliegender Erfindung, einen Schraubclip bereitzustellen, mit dem eine verlässlichere Befestigung von Anbauteilen, beispielsweise im Kraftfahrzeug, im Vergleich zum Stand der Technik gewährleistet ist.

### 3. Zusammenfassung der Erfindung

Die oben genannte Aufgabe wird durch einen Schraubclip gemäß dem unabhängigen Anspruch 1 sowie eine Schraube mit Schraubclip gemäß dem unabhängigen Anspruch 6 gelöst. Vorteilhafte Ausgestaltungen und Weiterentwicklungen des erfindungsgemäßen Schraubclips gehen aus der folgenden Beschreibung, den Zeichnungen und den anhängenden Ansprüchen hervor.

Die vorliegende Erfindung umfasst einen Schraubclip, um ein Anbauteil mit Hilfe einer Schraube zu befestigen. Dieser Schraubclip weist die folgenden Merkmale auf: eine dübelartige Schraubenaufnahme in Form eines geraden Pyramidenstumpfs mit mindestens vier Seitenkanten, die zwischen zwei gegenüberliegenden Seitenkanten der Schraubenaufnahme eine Freimachung aufweist, so dass die dübelartige Schraubenaufnahme mindestens zwei federnd angeordnete Schenkel umfasst, die durch zwei die Freimachung überbrückende Federstege federvorspannbar sind.

Der Schraubclip ist aufgrund der Form seiner dübelartigen Schraubenaufnahme an die Form der Löcher angepasst, in denen der Schraubclip befestigt werden soll. Diese Löcher weisen eine beliebige Anzahl an Ecken auf, bspw. eine viereckige, fünfeckige, sechseckige oder achteckige Form. Entsprechend ist die Schraubenaufnahme in Form des geraden Pyramidenstumpfs entlang ihres Umfangs ebenfalls viereckig, fünfeckig, sechseckig usw. ausgebildet. Gemäß einer Ausführungsform werden in rechteckig geformte Löcher Schraubenaufnahmen mit einer rechteckigen Querschnittsform bzw. Umfangsform eingesetzt. Es ist zudem bevorzugt, quadratisch geformte Löcher zu nutzen, so dass der Pyramidenstumpf regelmäßig und quadratisch mit vier Seitenkanten ausgebildet ist. In diesem Zusammenhang ist es weiterhin bevorzugt, den Pyramidenstumpf gerade und regelmäßig mit einer geraden Anzahl an Seitenkanten auszubilden. Diese Anordnung gewährleistet, dass die Haltekräfte für den Schraubclip im Loch durch alle Seiten der Schraubenaufnahme auf den Rand des Lochs übertragen werden; sich der Schraubclip dadurch im Loch verriegelt. Zu diesem Zweck verläuft mindestens eine Freimachung zwischen zwei gegenüberliegenden Seitenkanten. Durch den Verlauf dieser Freimachung wird somit jede der Seitenflächen der dübelartigen Schraubenaufnahme für diese Verriegelungsfunktion verwendet. Falls es die Querschnittsform der Schraubenaufnahme zulässt, verläuft die mindestens eine Freimachung vorzugsweise in diagonaler Richtung bezogen auf den Querschnitt der Schraubenaufnahme. Daher ist es denkbar, einen sechsseitig oder achtseitig geformten Pyramidenstumpf in ein entsprechend geformtes Loch einzusetzen. Aufgrund der zwischen zwei sich gegenüberliegenden Seitenkanten des Pyramidenstumpfs verlaufenden Freimachung wird die dübelartige Schraubenaufnahme in zwei einander gegenüberliegende Schenkel unterteilt. Da die Schraubenaufnahme an ihrem einen Ende geschlossen ist, sind die beiden Schenkel federnd miteinander verbunden. Diese federnde Verbindung wird ebenfalls durch zwei Federstege unterstützt, die nahe dem offenen Ende der dübelartigen Schraubenaufnahme angeordnet sind.

Gemäß einer bevorzugten Ausführungsform vorliegender Erfindung ist der Pyramidenstumpf der dübelartigen Schraubenaufnahme rechteckig, vorzugsweise quadratisch, ausgebildet und umfasst vier, vorzugsweise stumpfe, Seitenkanten. Mit der diagonal verlaufenden Freimachung wird daher die dübelartige Schraubenaufnahme in zwei federnd angeordnete Schenkel unterteilt. Diese Schenkel weisen vorzugweise an ihrer radialen Außenseite eine eckige Form auf, die durch zwei aneinander angrenzende Seitenflächen gebildet wird. Die jeweils beiden Seitenflächen beider Schenkel dienen der Verriegelung des Schraubclips an den anliegenden Seitenflächen des Lochs. Daher tragen lediglich die diagonal gegenüberliegenden Eckbereiche der Freimachung in der dübelartigen Schraubenaufnahme nicht zum Halten des Schraubclips in einem daran angepassten Loch eines Bauteils bei.

Gemäß einer weiteren Ausgestaltung vorliegender Erfindung umfasst die dübelartige Schraubenaufnahme an einem zweiten Ende eine tellerförmige Anordnung mit zentraler Durchgangsöffnung. Diese tellerförmige Anordnung ist durch die Freimachung in zwei Hälften unterteilt, die durch die Federstege miteinander verbunden sind. Während die tellerförmige Anordnung ein Durchrutschen des Schraubclips während des Einsetzens in ein passendes Loch verhindert, dienen die Federstege dem bereits oben genannten Vorspannen der Schenkel der dübelartigen Schraubenaufnahme. Werden die federnden Schenkel der dübelartigen Aufnahme für ein erleichtertes Einsetzen in das Loch aufeinanderzu gedrückt, beulen sich diese Federstege in radialer Richtung der tellerförmigen Anordnung nach außen aus. Dieses Ausbeulen generiert eine Federvorspannung auf die sich gegenüberliegenden Schenkel der dübelartigen Schraubenaufnahme, die diese Schenkel wieder in ihre Ausgangsposition zurück drückt. Diese Vorspannung und somit die Anordnung der Federstege unterstützt daher ebenfalls ein Verriegeln der radial außen liegenden Seitenflächen der dübelartigen Schraubenaufnahme an den angrenzenden Seiten des Lochs. Die Federstege drücken die Seitenfläche gegen die Seiten des Lochs, so dass hier ein Abstützen und Halten des Schraubclips im Loch erfolgt.

Gemäß einer weiteren Ausführungsform vorliegender Erfindung verjüngt sich die Schraubenaufnahme in Richtung auf die tellerförmige Anordnung stufenförmig, um mindestens einen Hinterschnitt entgegen einer Einsetzrichtung des Schraubclips in die Öffnung bzw. das Loch im Bauteil zu bilden. Liegen daher die Seitenflächen der dübelartigen Schraubenaufnahme federnd an den Seitenflächen des Lochs an (s. oben), erzeugt diese stufenförmige Verjüngung in Richtung der tellerförmigen Anordnung ein Verriegeln des Schraubclips, da die Seitenfläche des Lochs zwischen tellerförmiger Anordnung und Hinterschnitt gehalten wird. Diese Konstruktion verhindert ebenfalls ein Lösen des Schraubclips aus der Öffnung bzw. dem Loch im Bauteil.

Es ist ebenfalls bevorzugt, die Freimachung an ihrem der tellerförmigen Anordnung abgewandten Ende mit einer ovalen Kontur zur Aufnahme mechanischer Spannungen auszustatten.

Die vorliegende Erfindung umfasst zudem eine Schraube mit dem oben beschriebenen Schraubclip zur Befestigung von Anbauteilen an einem Bauteil.

### 4. Kurze Beschreibung der begleitenden Zeichnungen

Die vorliegende Erfindung wird unter Bezugnahme auf die begleitende Zeichnung näher erläutert. Es zeigen:
- Fig. 1: eine Explosionsdarstellung einer Ausführungsform des erfindungsgemäßen Schraubclips mit Bauteil, Anbauteil und befestigender Schraube,
- Fig. 2A bis D: Schnittdarstellungen durch einen installierten Schraubclip mit Schraube, mit dessen Hilfe Bauteile und Anbauteile unterschiedlicher Wandstärke befestigt worden sind,
- Fig. 3A, B: zwei perspektivische Ansichten des Schraubclips aus Fig. 1,
- Fig. 4: eine Schnittdarstellung durch den Schraubclip entlang der Linie A-A aus Fig. 7,
- Fig. 5: eine Außenansicht des Schraubclips aus Fig. 1,
- Fig. 6: eine Schnittdarstellung durch den Schraubclip aus Fig. 5 entlang der Linie A-A,
- Fig. 7: eine Draufsicht auf die tellerförmige Anordnung des Schraubclips aus Fig. 1 und
- Fig. 8: eine Ausschnittsvergrößerung der Hinterschnitte des Schraubclips aus Fig. 5.

### 5. Detaillierte Beschreibung bevorzugter Ausführungsformen

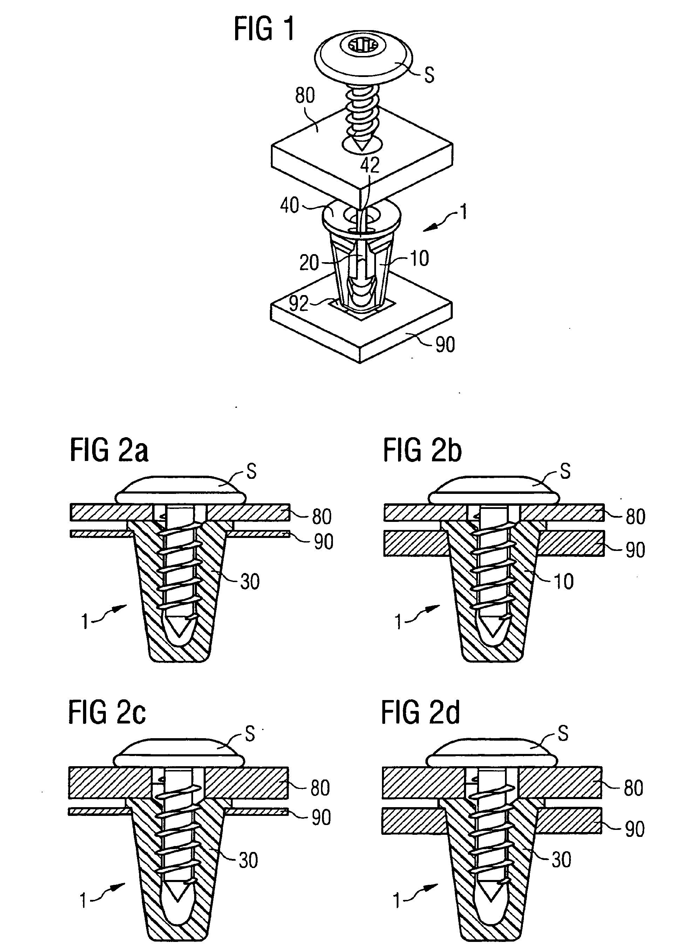

In Fig. 1 ist eine Explosionsdarstellung einer Ausführungsform des Schraubclips 1 mit Schraube S dargestellt. Der Schraubclip 1 wird an einem Bauteil 90 mit quadratischem Einbauloch 92 befestigt. Nachfolgend wird mit der Schraube S das Anbauteil 80 am Bauteil 90 angeschraubt.

Die Figuren 2A bis D zeigen Schnittdarstellung durch unterschiedliche Anbauteile 80, die mit Hilfe des Schraubclips 1 an unterschiedlichen Bauteilen 90 befestigt worden sind. Man kann erkennen, dass der Schraubclip 1 für eine Vielzahl unterschiedlicher Wandstärken von Bauteilen 90 und Anbauteilen 80 anwendbar ist.

Trotz unterschiedlicher Bauteil- und Anbauteilwandstärken ist immer annähernd die gleiche Länge der Schraube S im Eingriff mit dem Schraubclip 1. Daraus folgt, dass beim Einschrauben der Schraube S in den Schraubclip 1 annähernd mit dem gleichen Drehmoment trotz unterschiedlicher Bauteil-/Anbauteilwandstärken gearbeitet werden kann. Dies bietet eine höhere Prozesssicherheit im Vergleich zu bekannten Verfahren, weil ein Überdrehen der Schraube S und damit ein Beschädigen des Schraubclips 1 vermieden werden.

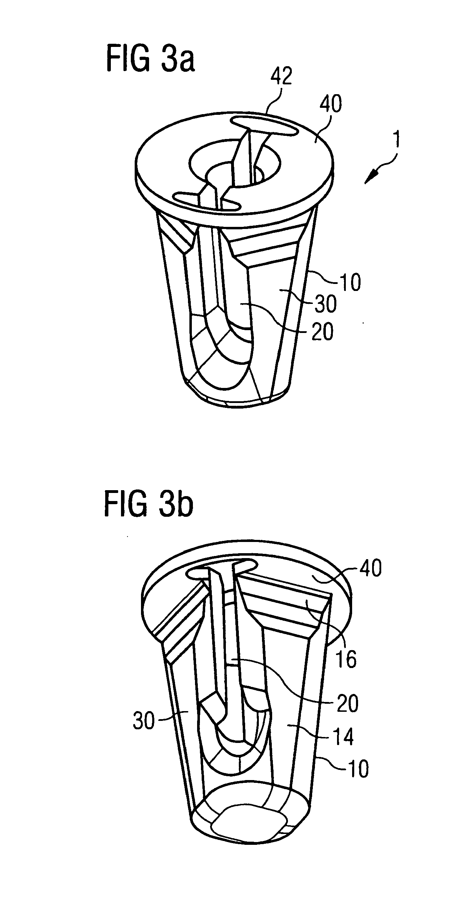

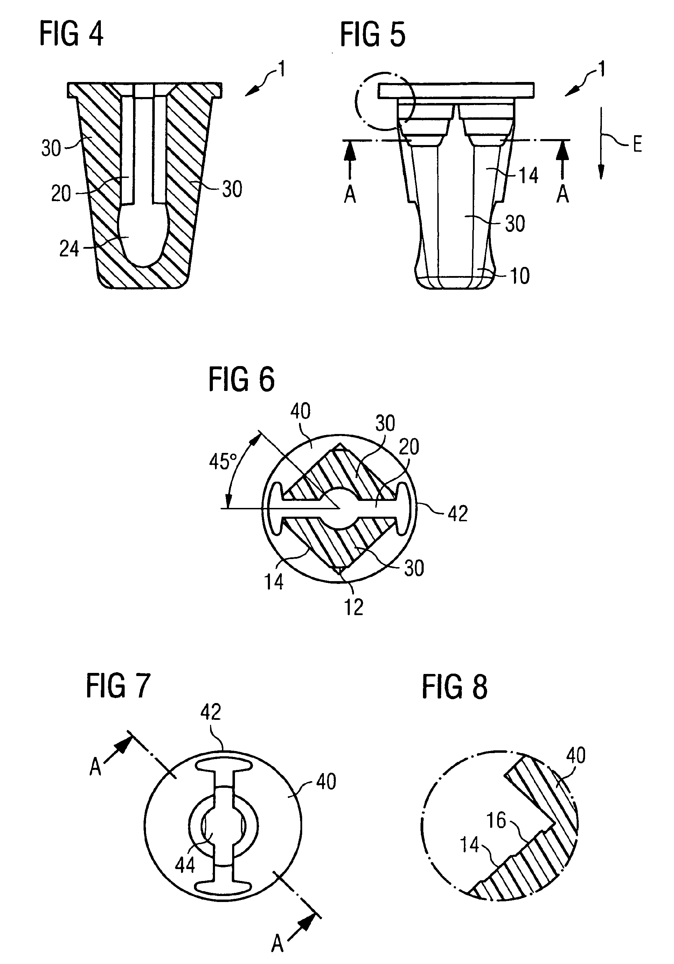

Der Schraubclip 1 aus Fig. 1 ist vergrößert in den Figuren 3A und B dargestellt. Er umfasst eine dübelartige Schraubenaufnahme 10, die ähnlich bekannter Dübelkonstruktionen aufgebaut ist. Die Schraubenaufnahme 10 hat die Form eines Pyramidenstumpfs einer geraden und regelmäßigen Pyramide, also eines geraden und regelmäßigen Pyramidenstumpfs, mit einer geraden Anzahl an Seitenkanten 12 und Seitenflächen 14 (vgl. Fig. 6). Das Loch 92 im Bauteil 90, in welches der Schraubclip 1 einzusetzen ist, ist an die Umfangsform der dübelartigen Aufnahme 10 angepasst. Ist die Schraubenaufnahme 10 vier-, fünf-, sechs- oder achtseitig, dann umfasst auch das Loch 92 entsprechend vier, fünf, sechs oder acht Seiten und Ecken. In weiterer Ausgestaltung des hier beispielhaft gezeigten Schraubclips 1 ist es ebenfalls denkbar, die Schraubenaufnahme in Form des geraden Pyramidenstumpfs mit beliebig vielen aber mindestens vier Seiten und Ecken auszubilden. Die Schraubenaufnahme 10 und das aufnehmende Loch 92 sollten jedoch aneinander angepasst sein. Daher könnte die Schraubenaufnahme 10 einen viereckigen, rechteckigen, quadratischen, fünfeckigen, sechseckigen usw. Querschnitt aufweisen. Es ist bevorzugt, den Pyramidenstumpf der Schraubenaufnahme regelmäßig und quadratisch mit vier Seitenkanten ausgebildet ist. In diesem Zusammenhang ist es weiterhin bevorzugt, den Pyramidenstumpf gerade und regelmäßig mit einer geraden Anzahl an Seitenkanten auszubilden.

Vorzugsweise umfasst die Schraubenaufnahme 10 vier Seiten und hat die Form eines quadratischen Pyramidenstumpfs mit vier Seitenkanten 12. Diese Seitenkanten 12 sind gemäß einer Ausführungsform abgerundet ausgeführt, wie es im Schnitt in Fig. 6 dargestellt ist. Die Schraubenaufnahme 10 weist an einem Ende eine tellerförmige Anordnung 40 auf. Mittig innerhalb der tellerförmigen Anordnung 40 ist eine zentrale Durchgangsöffnung 44 angeordnet, durch die die Schraube S in die Schraubenaufnahme 10 geschraubt wird. Das der tellerförmigen Anordnung 40 gegenüberliegende Ende der Schraubenaufnahme 10 ist geschlossen.

Zudem ist die Schraubenaufnahme 10 durch eine Freimachung 20 durchbrochen. Durch die Freimachung 20 entstehen zwei einander gegenüberliegend angeordnete Schenkel 30. Die Schenkel 30 sind am geschlossenen Ende der Schraubenaufnahme 10 miteinander verbunden. Während in den Figuren eine vierseitige Schraubenaufnahme 10 mit Freimachung 20 gezeigt ist, sind auch weitere Konstruktionen denkbar. Eine sechs- oder achtseitige Schraubenaufnahme 10 könnte beispielsweise eine oder eine Mehrzahl von diagonal verlaufenden Freimachungen 20 aufweisen. Diese Freimachungen 20 unterteilen dann die Schraubenaufnahme 10 in zwei oder mehrere Schenkel 30. Bei einer fünf- oder siebenseitigen Schraubenaufnahme 10 sind auch mindestens eine Freimachung 20 entlang einer nicht diagonalen Richtung denkbar, um die federnden Schenkel 30 zu erzeugen.

Wie im Speziellen in der Querschnittsdarstellung in Fig. 6 zu sehen ist, verläuft die Freimachung 20 jeweils zwischen zwei gegenüberliegenden Seitenkanten 12 in diagonaler Richtung der Schraubenaufnahme 10. Die Freimachung 20 erstreckt sich dabei ebenfalls in die tellerförmige Anordnung 40. Auf diese Weise wird die federnde Konstruktion der Schenkel 30 unterstützt. Durch das geschlossene Ende der Schraubenaufnahme 10 sind die Schenkel 30 in radialer Richtung vorgespannt, so dass sie nach einer radialen Ausrichtung in ihre Ausgangsposition zurückfedern würden. Diese federnde Anordnung der Schenkel 30 wird zudem durch Federstege 42 unterstützt. Diese Federstege 42 sind in der tellerförmigen Anordnung 40 angeordnet. Sie überbrücken dort in umfänglicher Richtung die mindestens eine Freimachung 20. Werden die Schenkel 30 aufeinander zu bewegt, beispielsweise beim Einsetzen des Schraubclips 1 in das Loch 92, beulen sich die Federstege 42 radial nach außen aus. Da die Federstege 42 in ihre Ausgangsform zurückkehren wollen, drücken sie die Schenkel 20 ständig radial nach außen. Auf diese Weise unterstützen auch die Federstege 42 ein Anliegen der Seitenflächen 14 der Schraubenaufnahme 10 an den Seitenflächen des Lochs 92 im Bauteil 90. Weiterhin wird durch die Federstege 42 eine Formstabilität des Schraubclips 1 gewährleistet. Dies spielt gerade deshalb eine Rolle, weil beispielsweise bei U-förmigen Anbauteilen aus Kunststoff aufgrund unterschiedlicher Einflussfaktoren ein Verzug auftreten kann. Zu diesen Einflussfaktoren zählen Spritzparameter, Wasseraufnahme, Wärmebelastung und GF-Anteile dieser Kunststoffteile.

Die mindestens eine Freimachung 20 (s. oben) verläuft in diagonaler Richtung zwischen zwei gegenüberliegenden Seitenkanten 12 (vgl. Fig. 6). Zum Einsetzen des Schraubclips 1 in das Loch 92 federn die Schenkel 30 radial nach innen bis die tellerförmige Anordnung 40 auf dem Bauteil 90 aufliegt. Nach vollständigem Einsetzen des Schraubclips 1 stützen sich alle Seitenflächen 14 der Schraubenaufnahme 10 an den jeweiligen Seitenflächen des Lochs 92 ab, weil sich die Schenkel 30 aufgrund ihrer Federvorspannung wieder radial nach außen bewegen. Dieses Abstützen der Seitenflächen 14 am Loch 92 wird durch die Federkräfte der Federstege 42 unterstützt. Würde die Freimachung 20 um 45° versetzt rechtwinklig zu zwei gegenüberliegenden Seitenflächen 14 orientiert sein, würde der Halt zwischen Schraubclip 1 und Loch 92 nur über die zwei gegenüberliegenden und nicht unterbrochenen Seitenflächen 14 hergestellt werden. Dies wäre von Nachteil, da weniger Haltekräfte des Schraubclips 1 genutzt werden könnten.

Um die Befestigung des Schraubclips 1 im Bauteil 90 weiter zu unterstützen, umfassen eine oder mehrere der Seitenflächen 14 mindestens einen Hinterschnitt 16. Fig. 8 zeigt eine Ausschnittsvergrößerung aus Fig. 5, in der die Hinterschnitte 16 dargestellt sind. Die Hinterschnitte 16 sind in einem Bereich der Schraubenaufnahme 10 angrenzend an die tellerförmige Anordnung 40 angeordnet. Die Hinterschnitte 16 sind derart angeordnet, dass sie ein Lösen des Schraubclips 1 aus dem Loch 92 entgegen einer Einsetzrichtung E (vgl. Fig. 5) des Schraubclips 1 verhindern. Vorzugsweise werden in Einsetzrichtung E nacheinander eine Mehrzahl von Hinterschnitten 16 auf den Seitenflächen 14 angeordnet. Um das Halten des Schraubclips weiter zu unterstützen befindet sich der mindestens eine Hinterschnitt 16 in einem Bereich angrenzend an die tellerförmige Anordnung 40, der sich entgegen der Einsetzrichtung E verjüngt (vgl. Fig. 8).

Mit dieser Konstruktion des Schraubclips 1 sind daher mehr Stabilität und höhere Ausreißkräfte des Schraubclips 1 realisierbar. Um zudem mögliche mechanische Spannungen bei der Bewegung der Schenkel 30 kunststoffgerecht aufzunehmen, ist eine löffelartige ovale Kontur 24 in der Freimachung 20 vorgesehen. Dies ist in Fig. 4 dargestellt.

Um eine ausreichende Stabilität des Schraubclips 1 gewährleisten zu können, wird dieser vorzugsweise aus mit Glasfasern gefüllten oder aus teilaromatisierten Polyamiden hergestellt. Sollten geringere Stabilitätsanforderungen an den Schraubclip 1 gestellt werden, ist beispielsweise auch eine Herstellung aus Polypropylen oder auch weniger leistungsfähigen Werkstoffen denkbar.

## Patentansprüche

1. Ein Schraubclip (1), um ein Anbauteil mit Hilfe einer Schraube (S) im Kraftfahrzeug zu befestigen, der die folgenden Merkmale aufweist:
a. eine dübelartige Schraubenaufnahme (10) in Form eines geraden Pyramidenstumpfs mit mindestens vier Seitenkanten (12), die an einem ersten Ende (14) geschlossen ist, an einem zweiten Ende eine tellerförmige Anordnung (40) mit zentraler Durchgangsöffnung (44) aufweist und die
b. zwischen zwei gegenüberliegenden Seitenkanten (12) der Schraubenaufnahme (10) durch eine Freimachung (20) durchbrochen ist, so dass die dübelartige Schraubenaufnahme (10) mindestens zwei federnd angeordnete Schenkel (30) umfasst, die an ihrer radialen Außenseite eine eckige Form aufweisen, die durch zwei an der Seitenkante (12) aneinander angrenzende Seitenflächen (14) gebildet ist, so dass der Schraubclip (1) jeweils über die beiden Seitenflächen (14) der mindestens zwei Schenkel (30) verriegelbar ist, wobei
c. die Schenkel (30) durch zwei die Freimachung (20) überbrückende Federstege (42) federvorspannbar sind, während
d. sich die Schraubenaufnahme (10) in Richtung auf die tellerförmige Anordnung (40) stufenförmig verjüngt, um mindestens einen Hinterschnitt (16) entgegen einer Einsetzrichtung (E) des Schraubclips (1) in eine Öffnung (92) zu bilden.

2. Schraubclip (1) gemäß Anspruch 1, dessen Schraubenaufnahme (10) eine gerade Anzahl an Seitenkanten (12) aufweist und dessen Freimachung (20) zwischen zwei gegenüberliegenden Seitenkanten (12) in diagonaler Richtung bezogen auf den Querschnitt der Schraubenaufnahme (10) verläuft.

3. Schraubclip (1) gemäß Anspruch 1, dessen Pyramidenstumpf rechteckig, vorzugsweise quadratisch, ist und vier, vorzugsweise stumpfe, Seitenkanten (12) aufweist.

4. Schraubclip (1) gemäß Anspruch 1, dessen tellerförmige Anordnung (40) durch die Freimachung (20) in zwei Hälften geteilt ist, die durch die Federstege (42) miteinander verbunden sind.

5. Schraubclip (1) nach Anspruch 1, dessen Freimachung (20) eine ovale Kontur (24) zur Aufnahme mechanischer Spannungen aufweist.

6. Schraube (S) mit Schraubclip (1) gemäß einem der vorhergehenden Ansprüche zur Befestigung eines Anbauteils (80) an einem Bauteil (90).

## Claims

1. A screw clip (1) for fastening an add-on part by means of a screw (S) in a motor vehicle, the screw clip (1) having the following features:
a. a dowel-like screw receptacle (10) having the form of a straight truncated pyramid with at least four side edges (12), which is closed at a first end (14), which has a plate-like arrangement (40) with a central through hole (44) at a second end, and which
b. is pierced through by a clearance (20) between two opposite side edges (12) of the screw receptacle (10) so that the dowel-like screw receptacle (10) comprises at least two resiliently arranged legs (30) having at their radial outer side an angular shape formed by two lateral surfaces (14) which are adjacent to each other at the side edge (12) so that the screw clip (1) is lockable via the both lateral surfaces (14) of the at least two legs (30) respectively, wherein
c. the legs (30) are spring preloadable by two spring bars (42) which bridge the clearance (20), wherein
d. the screw receptacle (10) tapers in steps towards the plate-like arrangement (40) to form at least one undercut (16) in an opposite direction to an introduction direction (E) of the screw clip (1) into the opening (92).

2. The screw clip (1) according to claim 1, the screw receptacle (10) of which has an even number of side edges (12) and the clearance (20) of which is arranged between two opposed side edges (12) in a transverse direction in relation to the cross section of the screw receptacle (10).

3. The screw clip (1) according to claim 1, the truncated pyramide of which is rectangular, preferably square, and comprises four, preferably dulled, side edges (12).

4. The screw clip (1) according to claim 1, the plate-like arrangement (40) of which is divided by the clearance (20) into two halves which are connected to each other by means of the spring webs (42).

5. The screw clip (1) according to claim 1, the clearance (20) of which has an oval contour (24) for absorption of mechanical tensions.

6. A screw (S) having a screw clip (1) according to one of the preceeding claims for fastening an add-on part (80) to a component (90).

## Revendications

1. Clip à vis (1) destiné à fixer une pièce rapportée dans un véhicule automobile à l'aide d'une vis (S), comprenant les éléments suivants :
a. un logement de vis (10) du genre douille sous la forme d'un cône tronqué avec au moins quatre bords latéraux (12), lequel est fermé à une première extrémité (14) et présente un arrangement en forme de disque (40) avec un orifice de passage central (44), et lequel
b. est interrompu par un dégagement (20) entre deux bords latéraux (12) du logement de vis (10), de sorte que le logement de vis du genre douille (10) comprend au moins deux branches (30) agencées de manière élastique et présentant une forme angulaire de leur côté extérieur radial, définie par deux surfaces latérales (14) adjacentes l'une à l'autre au niveau du bord latéral (12), de sorte que le clip à vis (1) peut être verrouillé respectivement par les deux surfaces latérales (14) des au moins deux branches (30), dans lequel
c. les branches (30) peuvent être précontraintes par ressort par deux barrettes à ressort (42) chevauchant le dégagement (20), tandis que
d. le logement de vis (10) se rétrécit par paliers dans la direction de l'arrangement en forme de disque (40), pour former au moins une contre-dépouille (16) à l'opposé d'une direction d'insertion (E) du clip à vis (1) dans une ouverture (92).

2. Clip à vis (1) selon la revendication 1, dont le logement de vis (10) comporte un nombre pair de bords latéraux (12) et dont le dégagement (20) entre deux bords latéraux opposés (12) s'étend dans la diagonale par rapport à la section transversale du logement de vis (10).

3. Clip à vis (1) selon la revendication 1, dont le cône tronqué est rectangulaire, de préférence carré, et comporte quatre bords latéraux (12), de préférence tronqués.

4. Clip à vis (1) selon la revendication 1, dont l'arrangement en forme de disque (40) est divisé en deux moitiés par le dégagement (20), lesquelles sont reliées entre elles par les barrettes à ressort (42).

5. Clip à vis (1) selon la revendication 1, dont le dégagement (20) comporte un contour ovale (24) pour la réception des tensions mécaniques.

6. Vis (S) avec un clip à vis (1) selon l'une des revendications précédentes, pour la fixation d'une pièce rapportée (80) sur une pièce de construction (90).
